# EUROPÄISCHE PATENTSCHRIFT

(11) **EP 3 679 591 B1**
(45) Veröffentlichungstag und Bekanntmachung des Hinweises auf die Patenterteilung: **02.11.2022**
(21) Anmeldenummer: 18762775.7
(22) Anmeldetag: 14.08.2018
(51) Int. Cl.: H01F 7/16, H01F 7/127, H01F 7/128, F02M 21/02, F02M 51/00, F02M 51/06

(54) **ELEKTROMAGNETISCHE STELLVORRICHTUNG, VERWENDUNG UND VERFAHREN ZUM HERSTELLEN EINER SOLCHEN**
ELECTROMAGNETIC ACTUATING DEVICE, USE AND METHOD FOR PRODUCING SAME
DISPOSITIF DE RÉGLAGE ÉLECTROMAGNÉTIQUE, UTILISATION ET PROCÉDÉ DE FABRICATION D'UN DISPOSITIF DE RÉGLAGE DE CE TYPE

(30) Priorität: 08.09.2017 DE 102017120806; 19.01.2018 DE 102018101230
(43) Veröffentlichungstag der Anmeldung: 15.07.2020
(73) Patentinhaber: ETO MAGNETIC GmbH, 78333 Stockach (DE)
(72) Erfinder: ZWICKEL, Rainer, 71665 Vaihingen an der Enz (DE); FÜLLGRABE, Dirk, 31319 Rethmar Deutschland (DE); RIEDLE, Achim, 78256 Steisslingen (DE); MASCHKE, Manfred, 75242 Neuhausen-Steinegg (DE); MANTSCH, Lutz, 73037 Göppingen (DE); KRAFT, Holger, 75417 Mühlacker (DE)
(74) Vertreter: Patent- und Rechtsanwälte Behrmann Wagner PartG mbB
(86) Internationale Anmeldenummer: PCT/EP2018/072011
(87) Internationale Veröffentlichungsnummer: WO 2019/048196

(56) Entgegenhaltungen:
- EP-A1- 2 194 632
- DE-A1- 3 844 642
- DE-A1-102013 224 719
- DE-A1-102014 226 421
- US-A- 5 339 063

## Beschreibung

Die vorliegende Erfindung betrifft eine elektromagnetische Stellvorrichtung nach dem Oberbegriff des Hauptanspruchs. Ferner betrifft die vorliegende Erfindung eine Verwendung einer derartigen elektromagnetischen Stellvorrichtung, und die Erfindung betrifft ein Verfahren zum Herstellen einer solchen.

Stellvorrichtungen der gattungsgemäßen Art sind aus dem Stand der Technik allgemein bekannt; es werden etwa zur Ventilbetätigung, also zum gesteuerten Öffnen oder Verschließen von Ventilbaugruppen wie etwa einem Ventilsitz ausgebildete Ankermittel als Reaktion auf eine Bestromung stationärer Spulenmittel relativ zu stationären, magnetisch flussleitenden Kernmitteln bewegt, wobei ein derartiges Stellprinzip für eine Vielzahl von Anwendungsfällen und, etwa im Fall einer Realisierung als Elektromagnetventil, für jeweils zu schaltende oder zu steuernde Fluide geeignet und realisiert ist.

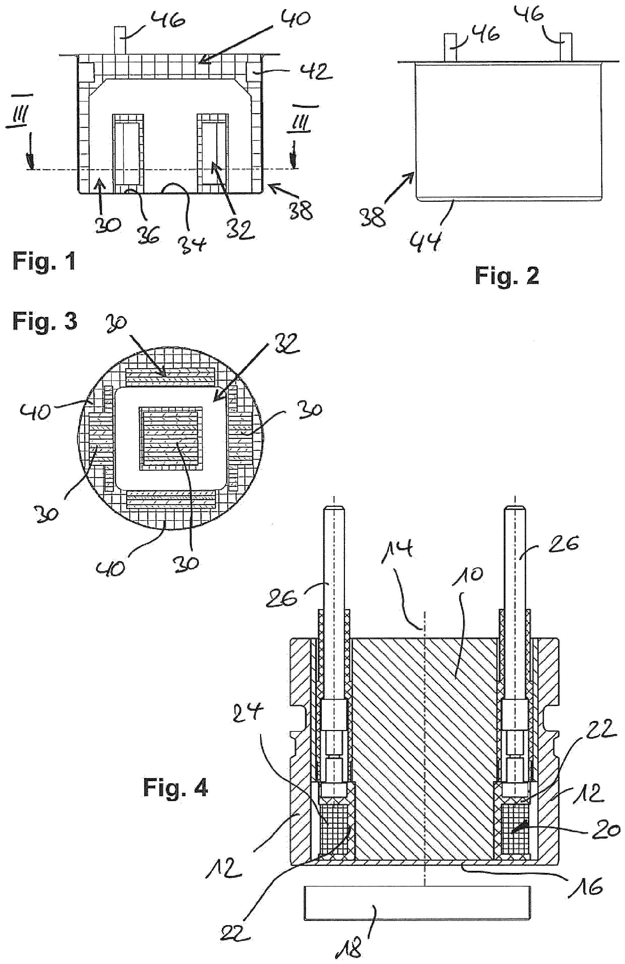

So zeigt etwa die Fig. 4 als technische Ausgangssituation, entsprechend der zum Anmeldungszeitpunkt unveröffentlichten DE 10 2017 103 799 der Anmelderin, einen zweiteiligen elektromagnetischen Kern 10, 12 als statische Baugruppe einer elektromagnetischen Stellvorrichtung, dessen im Hinblick auf eine Längsachse 14 axial einends ausgebildete Stirnfläche 16 eine teilweise Begrenzung eines Ankerraums bildet, in welchem wiederum flach ausgebildete Ankermittel 18 relativ zum Kern und damit zur Fläche 16 bewegbar geführt sind. Genauer gesagt zeigt die Fig. 4 eine Komponente eines elektromagnetischen Gasventils (auch in einer speziellen Realisierungsform für einen automobilen Kontext als "Injektorventil" bekannt), bei welchem der relativ zum Kern 10, 12 entlang der axialen Richtung 14 bewegbare Anker 18 einen (in der Figur nicht gezeigten) nadelartigen Stößel antreibt, welcher wiederum eine geeignet zum Ein- bzw. Auslassen des zu schaltenden Gases vorgesehene Düse verschließen kann.

Die Fig. 4 zeigt zusätzlich, wie in dem zweiteiligen, i.w. zylindrisch um die Achse 14 ausgebildeten Kern eine Spulenanordnung 20 eingebettet ist, dergestalt, dass ein (typischerweise aus einem polymeren Material durch Spritzgießen hergestellter) Wicklungsträger 22, eine geeignet aus einem beschichteten Kupferdraht realisierte Wicklung 24 tragend, in eine topfförmige Außenschale 12 des Kerns eingebettet ist. Die Wicklung 24 ist über ein Paar von Anschluss-Kontaktstiften 26 aus dem metallisch leitenden Kern herausgeführt, wobei, wie in der Schnittansicht der Figur erkennbar ist, das Paar der Kontaktstifte 26, geeignet isoliert, an einem Abschnitt zwischen der Kern-Außenschale 12 und einem inneren Kernkörper 10 aufgenommen ist.

Für die Montage der als bekannt vorausgesetzten Vorrichtung gemäß Fig. 4 wird der bewickelte Spulenträger 20 zusammen mit der Kern-Innenbaugruppe 10 in die Kern-Außenschale 12 eingesetzt, wobei diese, zur Ausbildung der Stirnfläche 16, einen Bodenabschnitt mit dünner Wandstärke, einstückig und gleichermaßen gebildet aus dem magnetisch leitenden Kernmaterial, aufweist. Dabei sorgt die dünne Wandstärke im Boden der Kernbaugruppe 12 dafür, dass bei Bestromung der Wicklung 24 im durch den Bodenbereich fließenden Abschnitt des elektro- bzw. spulenmagnetischen Flusskreises eine Sättigung auftritt, sodass nachteilige magnetische Kurzschlusseffekte bei der in der Fig. 4 gezeigten Vorrichtung weitgehend vermieden werden können.

Erkennbar ist ferner, dass die einstückige, becherförmige Ausbildung der äußeren Kernbaugruppe 12 bei dem angenommenen automobilen Verwendungszweck, Wasserstoff als Fluid für eine Brennstoffzelle zu schalten, wirksam die mit der Kupferdrahtwicklung 24 versehene Spulenträgerbaugruppe 22 vor schädlichem Einfluss dieses reaktiven Gases schützt: Es ist faktisch unmöglich, dass Gas aus dem Ankerraum in das Innere der topfförmigen Kernbaugruppe 12 eindringen kann.

Allerdings ist für die als bekannt vorausgesetzte Vorrichtung der Fig. 4, bei allen funktionalen Vorteilen etwa im beschriebenen Anwendungsgebiet, der Herstellungsaufwand hoch: So ist üblicherweise die topfförmige Kernbaugruppe 12 als Drehteil in der Herstellung aufwendig (zusätzlich erschwert durch den Umstand, dass das üblicherweise verwendete siliziumlegierte Metallmaterial hart und damit schlecht zerspanbar ist), auch erfordert die Kern-Innenbaugruppe 10 nicht unbeträchtlichen Herstellungs- und Einpassaufwand, insbesondere auch in Hinblick auf eine kontaktisolierte Montage des Anschlusspaares 26 zwischen den Kernkomponenten. Damit ist zwar die in Fig. 4 gezeigte Vorrichtung wirksam und effektiv in der Verhinderung des Eintretens eines potentiell Kupferlackdraht der Spulenwicklung 24 gefährdenden Fluids (z.B. Wasserstoff), die beschriebenen Material- und Herstellungseigenschaften dieser Technologie zeigen jedoch Grenzen in der Wirtschaftlichkeit auf, insbesondere im Hinblick auf eine Großserienfertigung derartiger Stellvorrichtungen.

Aus der WO 2016/096258 A1 ist eine weitere elektromagnetische Stellvorrichtung (wiederum als Elektromagnetventilvorrichtung) bekannt, welche einen anderen Weg beschreitet, um in eine Kernbaugruppe eingebettete Spulenmittel vor einem Einfluss durch in einem Gasraum (Ankerraum) vor der Kerneinheit fließenden Gases zu schützen. Anstatt, wie im Zusammenhang mit der Fig. 4 erläutert, den Spulenträger samt Wicklung in einem geschlossenen, becherförmigen Topf als Kernbaugruppe aufzunehmen, wird gemäß WO 2016/096258 A1 vollflächig auf die entsprechende Stirnseite des Kernkörpers eine (gasundurchlässige) Membran aufgebracht, welche, aus magnetisch nichtleitendem Material realisiert und damit ohn Einfluss auf die magnetischen Flussleitungsverhältnisse am bzw. im Kern, für die beabsichtigte Abdichtung sorgt.

Während auf diese Weise insbesondere der Zerspanungsaufwand für die Topfbaugruppe (Fig. 4) vermindert werden kann, bringt gleichwohl diese alternative Lösung neue und zusätzliche Probleme: So ist nämlich sicherzustellen, dass die Membranfläche des Standes der Technik gemäß WO 2016/096258 A1 nicht nur zuverlässig auf der zugehörigen Stirnseite des Kerns befestigt wird, diese Membran ist zudem - potentiell ganzflächig - gleichermaßen gegen das eintretende Fluid abzudichten. Wird etwa eine Kunststoffmembrane verwendet, entstehen zusätzliche Degradationseffekte angesichts eines stark reaktiven Gases. Bei Verwendung einer Metallmembran erhöhen sich die produktions- und dichtungstechnischen Herausforderungen; so würde etwa ein (lediglich) punktuelles Verschweißen eine zusätzliche Dichtung erfordern, während etwa eine ringförmige (und damit potentiell umlaufend dichte) Verschweißung die Gefahr birgt, dass es zu Verzug, entsprechend mechanischen Gleichmäßigkeits- und Qualitätsproblemen, kommt, mit wiederum zusätzlichen Erfordernissen an eine Qualitätskontrolle und evtl. Nachbearbeitung der so hergestellten komplexen Vorrichtung.

Die DE 38 44 642 A1 offenbart einen hydraulischen Teleskopstoßdämpfer, dessen Dämpfungseigenschaft mittels einer elektromagnetischen Ventilanordnung variiert werden kann. Die zugehörige Spule ist vor dem Hydraulikmedium geschützt untergebracht. Der dem Elektromagneten zugeordnete Anker ist an einem Ende der Spule oder des Elektromagneten angeordnet.

Die EP 2 194 632 A1 offenbart einen elektromagnetischen Aktuator aufweisend ein magnetisches Polstück, ein äußeres Joch, ein unteres Joch, einen Spulenkörper, einen abgestuften Abschnitt, der an einer Außenfläche des äußeren Jochs ausgebildet ist, und einen wasserdichten Abschnitt, der verhindert, dass eine korrosive Flüssigkeit dort eintritt, wo sich der Spulenkörper und das magnetische Polstück befinden.

Die US 5 339 063 A offenbart eine Magnetstatoranordnung aufweisend ein starres Metallaußengehäuse mit einer Basis, die eine Innenkammer definiert und wobei ein E-förmiger Statorkern zentral in der Innenkammer angeordnet ist, wobei sich ein isoliertes Kunststoffinnengehäuse zwischen dem Statorkern und dem Außengehäuse erstreckt, um den Kern fest in der Innenkammer zu sichern. Das äußere Gehäuse verstärkt das isolierte innere Kunststoffgehäuse gegen die durch hohen Kraftstoffdruck verursachten Ausbeulungskräfte.

Die DE 10 2013 224 719 A1 offenbart eine Magnetbaugruppe für ein Magnetventil, umfassend einen aus mindestens zwei Kernelementen zusammengesetzten Magnetkern und eine Magnetspule, die in eine ringförmige Ausnehmung eines Kernelements eingesetzt ist, wobei die Ausnehmung auf der Seite einer Polfläche, die das Kernelement ausbildet, über einen Stegabschnitt mediendicht verschlossen ist.

Aufgabe der vorliegenden Erfindung ist es daher, eine elektromagnetische Stellvorrichtung nach dem Oberbegriff des Hauptanspruchs mit zuverlässigen und insbesondere gegenüber reaktiven Fluiden im Ankerraum günstigen Abschirm- bzw. Abdichtungseigenschaften (bezogen auf die auf dem Spulenträger vorgesehene Wicklung) zu verbessern, dabei jedoch eine herstellungstechnisch einfache, kostengünstige und insbesondere auch für eine großserientaugliche Herstellbarkeit verbesserte Vorrichtung zu schaffen.

Die Aufgabe wird durch die elektromagnetische Stellvorrichtung mit den Merkmalen des Hauptanspruchs gelöst; vorteilhafte Weiterbildungen der Erfindung sind in den abhängigen Ansprüchen beschrieben. Zusätzlicher Schutz im Rahmen der Erfindung wird beansprucht für eine Verwendung der erfindungsgemäßen elektromagnetischen Stellvorrichtung zum Schalten und/oder Dosieren eines wasserstoffhaltigen Fluids, wobei eine weitere bevorzugte Verwendung den automotiven Technologiekontext und dort insbesondere die Brennstoffzellentechnologie betrifft. Schließlich wird Schutz im Rahmen der Erfindung beansprucht für ein Verfahren zum Herstellen der erfindungsgemäßen elektromagnetischen Stellvorrichtung (wobei dem Erzeugnisanspruch weiterbildende Unteransprüche als gleichermaßen das Verfahren weiterbildend offenbart geltend).

In erfindungsgemäß vorteilhafter Weise sind die Kernmittel, welche die - mit der Wicklung versehenen - Spulenmittel zumindest abschnittsweise eingebettet aufweisen, von einem topf- und/oder becherartigen Gehäuse aus einem nicht-magnetischen Material so umgeben und/oder umschlossen, dass die Kernmittel auf einem membranartigen, durchgängigen und geschlossenen Bodenabschnitt des Gehäuses aufsitzen. Dieser Bodenabschnitt des Gehäuses bildet dann wiederum, insoweit analog zum oberbegrifflichen Stand der Technik, eine Grenzfläche des Ankerraums aus, ist jedoch gemäß der Erfindung aus einem nicht-magnetischen Material gebildet, bevorzugt aus einem Metallmaterial und weiter bevorzugt aus einem tiefziehtauglichen Metall, wie etwa einem Edelstahlblech.

Erfindungsgemäß vorteilhaft wird damit zum einen erreicht, dass das topf- bzw. becherartige Gehäuse wirksam die darin sitzenden Spulenmittel samt Wicklung vor reaktivem Gaseinfluss aus dem Ankerraum schützt, sodass insbesondere komplexe Dichtungsstrukturen beim Verbinden mehrerer Baugruppen oder Komponenten vermieden werden können - das einstückige topf- bzw. becherartige Gehäuse, weiter bevorzugt durch Tiefziehen oder andere großserientaugliche Herstellungstechnologien kostengünstig fertigbar, gestattet nicht nur eine einfache und wirksame Dichtung, sondern realisiert zudem signifikante Herstellungs- und Kostenvorteile.

Damit ist zunächst erfindungsgemäß auf eine mechanisch und fertigungstechnisch einfache Weise eine vollständige Abdichtung im Montagezustand für im Inneren des topf- bzw. becherartigen Gehäuses vorgesehene bzw. vorzusehende Spulenmittel erreicht; aggressives, reaktives gasförmiges Fluid kann durch den einstückigen, aus dem Gehäusematerial realisierten Bodenabschnitt nicht zum Spulenträger und der darauf vorgesehenen Wicklung vordringen. Damit eignet sich die erfindungsgemäße elektromagnetische Stellvorrichtung in herausragender Weise etwa zur Realisierung einer Ventilfunktionalität, etwa für ein Schalten bzw. Dosieren eines gasförmig-reaktiven Fluids wie Wasserstoff.

Zudem hat es sich als vorteilhaft im Rahmen der Erfindung herausgestellt, dass der membranartige, durchgängige und geschlossene Bodenabschnitt des Gehäuses nicht nur die beschriebenen vorteilhaften Dichtwirkungen in Verbindung mit einfacher Herstellbarkeit besitzt, auch sorgt der (dünne) Membrancharakter dieses Bodenabschnitts dafür, dass ein damit zwischen den Kernmitteln und den Ankermitteln bewirkter (bzw. vergrößerter) Arbeitsspalt nicht durch das (magnetisch nicht-leitende) Material des Gehäuses beeinträchtigt wird, insbesondere auch die Effizienz im magnetischen Flusskreis nicht signifikant schwächt.

In fertigungstechnisch günstiger Weise ist vorgesehen, die Kernmittel als Mehrzahl von gestapelt vorliegenden und insbesondere durch Stanzen oder ein vergleichbares großserientaugliches Herstellungsverfahren hergestellten Blechelementen auszubilden. Eine als derartiger Stapel aus gestanzten Einzelblechen realisierte Kernbaugruppe weist besonders günstige magnetische Eigenschaften auf und wirkt der Ausbildung von Wirbelströmen entgegen.

In alternativer Ausführungsform zu den Blechelementen sind die Kernmittel als Körper aus Sintermaterial realisiert.

Ein derartiger Körper ist gegenüber durch zerspanende Verfahren wie Drehen oder Fräsen gefertigten Kernmaterialien kostengünstiger herstellbar und weist im Vergleich zu geblechten Kernmaterialien eine größere magnetisch wirksame Materialmasse auf. Der Nachteil einer höheren Empfindlichkeit gegenüber dem schädlichen Einfluss von reaktiven Gasen wird durch die erfindungsgemäße Ausgestaltung mit dem einstückigen topf- und/oder becherartigen Gehäuse entgegengewirkt. Auch lässt sich, etwa in Form geeigneter Profilierungen, Aussparungen od.dgl., das erfindungsgemäße Einbetten bzw. Umschließen des Spulenträgers samt Wicklung sowohl in einem Kernblechstapel als auch in einem Körper aus Sintermaterial einfach realisieren, wobei, wiederum bei geeignet ausgestalteter Geometrie der beteiligten Komponenten, nicht nur die plane Stirnfläche der Kernmittel ausbildbar ist, sondern weiterbildend auch der Spulenträger mit einer Stirnfläche in dieser Ebene liegt, sodass dann die Anordnung herstellungstechnisch einfach und magnetisch optimiert auf dem Bodenabschnitt des Gehäuses aufsitzen kann.

Für die herstellungstechnische Optimierung und einen weiter verbesserten Schutz insbesondere der Wicklung ist es erfindungsgemäß vorgesehen, die Kernmittel von einer bevorzugt zylindrischen Umspritzung zu umschließen, deren Außendurchmesser an eine lichte Innenweite des topf- bzw. becherartigen Gehäuses angepasst ist. Vorteilhaft und weiterbildend kann es vorgesehen sein, die als gestapelte Blechelemente oder als Körper aus Sintermaterial ausgeführten Kernmittel (samt eingesetzter Spulenmittel) von einer geeignet polymeren bzw. aus einem üblichen Harz- bzw. Kunststoffmaterial realisierten Umspritzung zu umschließen, wobei diese Umspritzung dann zusätzlich die Möglichkeit schafft, einen Formschluss mit dem Inneren des topf- bzw. becherartigen Gehäuses zu schaffen; im Fall einer hohlzylindrischen Gehäuseinnenkontur würde entsprechend die Umspritzung eine zylindrische Außenform aufweisen.

Zusätzlich bietet die Umspritzung die Möglichkeit, einen (weiter bevorzugt mittels gängiger, normierter Stecker mechanisch und elektrisch kontaktierbaren) Stecker- bzw. Buchsenabschnitt einstückig anzuformen bzw. auszubilden, sodass auch auf diese Weise zusätzlich die Dichtigkeit sowie die Großserientauglichkeit der erfindungsgemäß hergestellten Stellvorrichtung verbessert ist. Dabei ist zusätzlich bevorzugt das Gehäuse bzw. die Umspritzung axial so bemessen bzw. ausgebildet, dass mindestens ein Anschluss (weiter bevorzugt als ansonsten bekanntes Paar von Kontaktstiften realisiert) aus einer dem Gehäuse-Bodenabschnitt entgegengesetzten Richtung aus dem Gehäuse herausragt und an dieser axialen Position kontaktiert werden kann (wobei gleichwohl eine Kontaktgabe auch bei einem noch im Gehäuse versenkten Anschluss erfolgen könnte).

In herstellungstechnisch günstiger Weise ist weiterbildend im Rahmen der Erfindung vorgesehen, das Gehäuse durch Tiefziehen eines nicht-magnetischen Metall- bzw. Stahlmaterials herzustellen. Auf diese Weise lässt sich nicht nur kostengünstig diese Baugruppe zur Realisierung der Erfindung herstellen, auch bietet das Tiefziehen die Möglichkeit, eine Dicke des Bodenabschnitts, s. oben, einerseits so dick auszubilden, dass die gewünschte Schutzwirkung für die im Gehäuseinneren aufgenommene Wicklung gewährleistet ist, andererseits die Dicke auf ein die magnetischen Eigenschaften der Vorrichtung optimierendes Minimum zu reduzieren. Insbesondere V2A oder ein vergleichbares legiertes Stahlmaterial eignet sich weiterbildend günstig für ein derartiges Tiefziehen.

Eine so aufgebaute Stellvorrichtung eignet sich damit zwar für prinzipiell beliebige Stellaufgaben, insbesondere jedoch für die Realisierung eines gasschaltenden Ventils (wobei insbesondere die Eignung für ein stark reaktives Fluid besteht). Entsprechend ist es erfindungsgemäß vorgesehen, die Erfindung zum Schalten bzw. Dosieren eines wasserstoffhaltigen Fluids in der Realisierung eines Injektorventils zu verwenden, ohne damit jedoch die Anwendungsbereiche der Erfindung zu beschränken. Vielmehr eignet sich die vorliegende Erfindung für jegliche Realisierung einer elektromagnetischen Stellvorrichtung, bei welcher (insbesondere und bevorzugt als Flachanker ausgebildete) Ankermittel in geeigneter Weise einen Ventilsitz (als möglichen Stellpartner) öffnen bzw. schließen, und wobei neben gasförmigem Fluid auch andere Fluide prinzipiell schalt- und dosierbar sind.

Auch wird aus der obigen Beschreibung der Erfindung sowie der Weiterbildungen deutlich, dass die Erfindung eine vorteilhafte und optimierte Herstellung der elektromagnetischen Stellvorrichtung ermöglicht, welche, etwa gegenüber dem gattungsbildenden Stand der Technik, sich durch verbesserte Automatisierbarkeit und damit potentiell bessere (d.h. günstigere) Großserientauglichkeit auszeichnet. So ist es insbesondere durch die vorliegende Erfindung ermöglicht, zunächst den erfindungsgemäßen Spulenträger mit der erfindungsgemäßen Wicklung zu versehen, um dann diese Spulenmittel in die Kernmittel so einzusetzen, dass die Spulenmittel zumindest abschnittsweise in die Kernmittel eingebettet und/oder von diesen umschlossen sind. In einem nächsten erfindungsgemäßen Verfahrensschritt ist vorgesehen, die Kernmittel mit eingesetzten Spulenmitteln mit einer Vergussmasse so zu umschließen bzw. zu umspritzen (und ggf. nachzubearbeiten), dass ein an eine Innenweite des topf- bzw. becherartigen Gehäuses angepasster Körper entsteht, weiter bevorzugt ein vollständiger Formschluss zwischen einer (radialen) Außenwand der umspritzten Kernmittel und einer Innenwand des Gehäuses realisiert ist. So vorbereitete Baugruppen lassen sich dann einfach durch Einsetzen des durch das Umspritzen entstehenden Körpers in das Gehäuse zusammenführen, wobei im Rahmen der Erfindung dann die plane Stirnfläche der Kernmittel auf dem Bodenabschnitt des Gehäuses aufsitzt.

Auch wenn es, wie beschrieben, bevorzugt ist, den umspritzten Körper zur Montage in das Gehäuse 38 einzusetzen, ist es gleichwohl möglich, alternativ das Umspritzen durch Ausfüllen des Gehäuseinnenraums bei eingesetzten Kern- und Spulenmitteln zu bewirken.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1:: eine Längsschnittansicht durch die Kernmittel einer elektromagnetischen Stellvorrichtung gemäß einem ersten bevorzugten Ausführungsbeispiel;
- Fig. 2:: eine Seitenansicht auf das topf- bzw. becherförmige Gehäuse im Ausführungsbeispiel der Fig.1 (mit um 90° um eine Längsachse verdrehter Position);
- Fig. 3:: eine Querschnittsansicht entlang der Schnittebene III - III der Fig. 1, und
- Fig. 4:: eine schematische Längsschnittansicht einer zum Stand der Technik exemplarisch herangezogenen Realisierung von Kernmitteln einer elektromagnetischen Ventilvorrichtung als Injektorventil für gasförmige Medien mit schematisch dazu angeordneten (Flach-)Ankermitteln.

Für die Beschreibung des Ausführungsbeispiels der Fig. 1 - 3 gelten für mit der Fig. 4 analoge bzw. identische Baugruppen und Funktionseinheiten jeweils identische Bezugszeichen; zudem würde, insoweit analog zur Fig. 4, auch die Kerneinheit (Kernmittel) der Fig. 1 - 3 mit einer (in diesen Figuren nicht gezeigten) Ankereinheit gegenüber dem Bodenabschnitt zusammenwirken, wobei diese Ankereinheit dann wiederum, in ansonsten bekannter Weise, die beabsichtigte Stell- oder Ventilaufgabe löst, etwa in vorbeschriebener Weise durch Zusammenwirken mit Stößelmitteln zum Betätigen eines Injektors für gasförmige Medien im Kraftfahrzeugbereich.

Die montierte Kerneinheit (Kernmittel) 30 in Fig. 1 und Fig. 3 ist beispielhaft als gestapelte Anordnung einer Mehrzahl von Transformatorenblechen ausgeführt, welche etwa im mittleren Bereich (und damit zum Einstecken in einen polymeren Spulenträger 32 quadratischen Querschnitts) E-förmig ausgestaltet sind und mit den freien Schenkelenden dann eine Stirnfläche 34 des Stapels ausbilden. Wie zudem die Längsschnittansicht der Fig. 1 verdeutlicht, ist diese E-Form der Transformatorenbleche so ausgebildet, dass der Spulenträger 32 entlang seiner axialen (d.h. in der Figurenebene der Fig. 1 vertikalen) Richtung so an die Schenkel der Bleche angepasst ist, dass eine Stirnseite 36 in einer Ebene mit der planen Stirnfläche 34 des Kernstapels liegt.

Für eine Realisierung des Kernmittels als Körper aus Sintermaterial gelten die vorstehenden geometrischen Ausgestaltungen gleichermaßen.

Die den montierten bzw. zusammengeführten Zustand mit einem tiefgezogenen becherförmigen Gehäuse 38 aus Edelstahl zeigenden Ansichten der Fig. 1, Fig. 3 verdeutlichen zudem, wie die beschriebene, ineinandergesteckte Anordnung aus Transformatorenblechen bzw. Sinterkörper und Spulenträger 32 (samt aufsitzender, nicht im Detail gezeigter Wicklung aus Kupferdraht) umspritzt ist von einem thermoplastischen Polyamidharz 40, wobei die Umspritzung (in bevorzugter Herstellung noch im unmontierten Zustand, d.h. gelöst vom Gehäuse 38) eine Umfangskontur aufweist, welche, entsprechend der zylindrischen Innenkontur des Gehäuses 38, einen Außenzylinder beschreibt, zusätzlich dann noch entlang der axialen Richtung (Vertikalebene der Fig. 1, Fig. 2) in der durch die Flächen 34, 36 beschriebenen Ebene liegt. Die Schnittansicht der Fig. 1 lässt zudem erkennen, dass, zur weiteren Verbesserung der Dichtwirkung des durch die Umspritzung 40 erzeugten Körpers im Gehäuse 38, im Spritzpolymer eine umlaufende Ringnut 42, ausgebildet zum Aufnehmen einer O-RingDichtung od.dgl., eingeformt ist.

Im zusammengefügten Montagezustand der Fig. 1 sitzt der durch die Umspritzung 40 beschriebene Körper samt Blechanordnung 30 und Spulenträger 32 auf einer planen Innenfläche eines Bodenabschnitts 44 des topf- bzw. becherförmigen Gehäuses 38 auf. Dieser Bodenabschnitt 44 bestimmt dann durch seine Außenfläche, insoweit analog zur Fig. 4, einen axial benachbarten Ankerraum, gegenüber dem dann bevorzugt ein Flachanker (etwa analog Bezugszeichen 18 in Fig. 4) bewegbar gelagert ist und dann vorgesehene Stell- bzw. Ventilaufgaben durchführen kann.

Am dem Bodenabschnitt 44 entgegengesetzten Gehäuseende ragen aus der freien Gehäuseöffnung wiederum Steckerabschnitte 46 heraus, welche, in bevorzugter Weise einstückig mit dem Polymermaterial der Umspritzung 40 ausgebildet, dann die externe elektrische Kontaktierung und Bestromung der auf dem Spulenträger sitzenden Wicklung ermöglichen können (der zugehörige Anschlussdrahtverlauf ist in den Figuren nicht gezeigt).

Auf die beschriebene Weise sind Kernmittel zur Realisierung eines Gasventils als Stellvorrichtung realisiert, die, bei einem exemplarischen Gehäusedurchmesser des Gehäuses 38 von ca. 21mm und einer Materialstärke des Gehäuses von 0,15mm (eingeschlossen des Bodenabschnitts) einem typischen maximalen Außen- bzw. Ventilhub von ca. 0,3 bis 0,5mm realisieren.

## Patentansprüche

1. Elektromagnetische Stellvorrichtung mit
relativ zu stationären, magnetisch flussleitenden Kernmitteln (30) als Reaktion auf eine Bestromung von stationären Spulenmitteln (32) in einem Ankerraum bewegbaren, zur Betätigung eines Stellpartners ausgebildeten Ankermitteln, wobei die einen mit einer Wicklung versehenen Spulenträger (32) sowie mindestens einen externen kontaktierbaren Anschluss (46) aufweisenden Spulenmittel zumindest abschnittsweise in die Kernmittel eingebettet und/oder von diesen umschlossen vorgesehen sind
und die Kernmittel zum Zusammenwirken mit den Ankermitteln eine zumindest abschnittsweise plane Stirnfläche (34) ausbilden,
wobei die Kernmittel und die Spulenmittel von einem einstückigen topf- und/oder becherartigen Gehäuse (38) aus einem tiefziehfähigen Material so umgeben und/oder umschlossen sind, dass die Kernmittel auf einem membranartigen, durchgängigen und geschlossenen Bodenabschnitt des Gehäuses aufsitzen, wobei der Bodenabschnitt eine Grenzfläche des Ankerraums ausbildet und
**dadurch gekennzeichnet, dass**
die Kernmittel (30) von einer bevorzugt zylindrischen Umspritzung (40) umschlossen sind, deren Außendurchmesser an eine lichte Innenweite des topf- bzw. becherartigen Gehäuses angepasst ist.

2. Vorrichtung nach Anspruch 1, **dadurch gekennzeichnet, dass** die Kernmittel (30) als Mehrzahl von gestapelt vorliegenden, bevorzugt durch Stanzen hergestellten Blechelementen realisiert sind.

3. Vorrichtung nach Anspruch 1, **dadurch gekennzeichnet, dass** die Kernmittel (30) als Körper aus Sintermaterial realisiert sind.

4. Vorrichtung nach einem der Ansprüche 1 bis 3, **dadurch gekennzeichnet, dass** der aus einem Kunststoffmaterial, insbesondere als Spritzgießteil, realisierte und die Kupfer aufweisende Wicklung tragende Spulenträger (32) in die Kernmittel (30) eingesetzt ist und bevorzugt mit einer Stirnseite (36) am Bodenabschnitt anliegt.

5. Vorrichtung nach einem der Ansprüche 1 bis 4, **dadurch gekennzeichnet, dass** die Umspritzung einen Stecker- oder Buchsenabschnitt (46) des extern kontaktierbaren Anschlusses der Spulenmittel realisiert.

6. Vorrichtung nach einem der Ansprüche 1 bis 5, **dadurch gekennzeichnet, dass** die Umspritzung so bemessen und ausgebildet ist, dass der extern kontaktierbare Anschluss auf einer dem Bodenabschnitt entgegengesetzten Richtung aus dem Gehäuse herausragt und/oder dort extern kontaktierbar ist.

7. Vorrichtung nach einem der Ansprüche 1 bis 6, **dadurch gekennzeichnet, dass** das Gehäuse (38) durch Tiefziehen eines Stahlmaterials hergestellt ist.

8. Vorrichtung nach einem der Ansprüche 1 bis 7, **dadurch gekennzeichnet, dass** die als Flachanker ausgebildeten Ankermittel zum Zusammenwirken mit einem Ventilsitz oder zum Betätigen stößel- oder nadelartiger Injektormittel, insbesondere für ein gasförmiges Fluid, ausgebildet sind.

9. Verwendung der Vorrichtung nach einem der Ansprüche 1 bis 8 zur Realisierung eines Gasventils, insbesondere für reaktive Gase und/oder für ein Fahrzeugaggregat, wobei der Stellpartner eine Ventilbaugruppe, insbesondere Ventilsitz, des Gasventils ist.

10. Verwendung nach Anspruch 9, **dadurch gekennzeichnet, dass** das Gehäuse so ausgebildet ist, dass eine Dicke des Bodenabschnitts, bezogen auf einen maximalen Stellhub der Ankermittel, ein Verhältnis zwischen 1:1,5 und 1:5 aufweist.

11. Verfahren zum Herstellen der elektromagnetischen Stellvorrichtung nach einem der Ansprüche 1 bis 8, **gekennzeichnet durch** die Schritte:
- Einsetzen des mit der Wicklung versehenen Spulenträgers in die Kernmittel (30),
- Umspritzen der Kernmittel mit eingesetztem Spulenträger mit einer Vergussmasse so, dass ein an eine Innenweite des topf- bzw. becherartigen Gehäuses angepasster Körper entsteht und
- Einsetzen des Körpers in das Gehäuse so, dass die plane Stirnfläche der Kernmittel auf dem Bodenabschnitt des Gehäuses aufsitzt.

12. Verfahren nach Anspruch 11, **dadurch gekennzeichnet, dass** mit dem Umspritzen ein Stecker- oder ein Buchsenabschnitt zum externen Kontaktieren des Anschlusses der Spulenmittel hergestellt wird.

## Claims

1. An electromagnetic positioning device having
anchor means which are realized for actuating a positioning partner and which are movable in an anchor space relative to stationary core means (30), which conduct magnetic flux, as a reaction to an energization of stationary coil means (32),
the coil means, which have a coil support (32) provided with a winding and at least one external contactable connector (46), being embedded at least in sections in the core means and/or being surrounded by said core means
and the core means realizing an end surface (34), which is planar at least in sections, for interacting with the anchor means,
the core means and the coil means being embedded in and/or surrounded by a one-piece pot-like and/or cup-like housing (38) made of a material suitable for deep-drawing in such a manner that the core means rest on a membrane-like, continuous and closed base section of the housing, the base section realizing a boundary surface of the anchor space,
**characterized in that**
the core means (30) are surrounded by a preferably cylindrical encapsulation (40), the outer diameter of said encapsulation being adapted to a clear inside width of the pot-like or cup-like housing.

2. The device according to claim 1, **characterized in that** the core means (30) are realized as a plurality of stacked sheet metal elements which are preferably produced by punching.

3. The device according to claim 1, **characterized in that** the core means (30) are realized as bodies made of sinter material.

4. The device according to any one of claims 1 to 3, **characterized in that** the coil support (32), which is made of a plastic material, in particular as an injection-molded part, and which supports the coppery winding, is inserted into the core means (30) and that an end face (36) of said coil support is preferably in contact with the base section.

5. The device according to any one of claims 1 to 4, **characterized in that** the encapsulation realizes a plug or socket section (46) of the externally contactable connector of the coil means.

6. The device according to any one of claims 1 to 5, **characterized in that** the encapsulation is dimensioned and realized in such a manner that the externally contactable connector projects from the housing in a direction which is opposite to the base section and/or can be externally contacted there.

7. The device according to any one of claims 1 to 6, **characterized in that** the housing (38) is produced by deep-drawing a steel material.

8. The device according to any one of claims 1 to 7, **characterized in that** the anchor means, which are realized as flat anchors, are realized for interacting with a valve seat or for actuating plunger-like or needle-like injection means, in particular for a gaseous fluid.

9. A use of the device according to any one of claims 1 to 8 for realizing a gas valve, in particular for reactive gases and/or for a vehicle unit, the positioning partner being a valve assembly, in particular a valve seat, of the gas valve.

10. The use according to claim 9, **characterized in that** the housing is realized in such a manner that a thickness of the base section has a ratio between 1:1.5 and 1:5 in relation to a maximum positioning stroke of the anchor means.

11. A method for producing the electromagnetic positioning device according to any one of claims 1 to 8, **characterized by** the steps:
- inserting the coil support provided with the winding into the core means (30),
- encapsulating the core means comprising the inserted coil support with a casting compound in such a manner that a body is realized which is adapted to an inside width of the pot-like or cup-like housing and
- inserting the body into the housing in such a manner that the plane end surface of the core means rests on the base section of the housing.

12. The method according to claim 11, **characterized in that** a plug section or a socket section for the external contacting of the connector of the coil means is produced by the encapsulation.

## Revendications

1. Dispositif d'actionnement électromagnétique ayant
des moyens d'ancrage qui sont conçus pour actionner une partenaire d'actionnement et qui peuvent être bougés dans un espace d'ancrage relative à des moyens de noyau (30) stationnaires, qui conduit du flux magnétique, en réaction à une alimentation en courant des moyens de bobine (32) stationnaires,
les moyens de bobine, qui a un porteur-bobine (32) pourvu d'un enroulement et au moins un connecteur (46) externe pouvant être contacté, étant encastrés dans les moyens de noyau au moins en partie et/ou étant encerclés par les moyens de noyau
et les moyens de noyau réalisant une surface frontale (34), qui est plane au moins en partie, pour interagir avec les moyens d'ancrage, les moyens de noyau et les moyens de bobine étant encastrés dans et/ou étant encerclés par un boîtier (38) fait en une seule pièce en forme de cocotte et/ou en forme de gobelet et fait en un matériau approprié pour l'emboutissage de telle manière que les moyens de noyau restent sur une section de base du boîtier continue, fermée et fait comme membrane, la section de base réalisant une surface de séparation de l'espace d'ancrage,
**caractérisé en ce que**
les moyens de noyau (30) sont encerclés par une encapsulation (40), de préférence cylindrique, le diamètre extérieur de l'encapsulation étant adapté à une largeur d'intérieur claire du boîtier en forme de cocotte ou de gobelet.

2. Dispositif selon la revendication 1, **caractérisé en ce que** les moyens de noyau (30) sont réalisés comme pluralité d'éléments de tôle empilés qui sont produits de préférence par le poinçonnage.

3. Dispositif selon la revendication 1, **caractérisé en ce que** les moyens de noyau (30) sont réalisés comme corps fait du matériau fritté.

4. Dispositif selon l'une quelconque des revendications 1 à 3, **caractérisé en ce que** le porteur-bobine (32), qui est fait d'un matériau plastique, notamment comme pièce de moulage par injection, et qui supporte l'enroulement en cuivre, est inséré dans les moyens de noyau (30) et une surface frontale (36) du porteur-bobine de préférence est en contact avec la section de base.

5. Dispositif selon l'une quelconque des revendications 1 à 4, **caractérisé en ce que** l'encapsulation réalise une section (36) de prise mâle ou de prise femelle du connecteur pouvant être contacté en externe de moyens de bobine.

6. Dispositif selon l'une quelconque des revendications 1 à 5, **caractérisé en ce que** l'encapsulation est dimensionnée et réalisée de telle manière que le connecteur pouvant être contacté en externe fait saillie du boîtier dans un sens qui s'oppose la section de base et/ou peut être y contacté en externe.

7. Dispositif selon l'une quelconque des revendications 1 à 6, **caractérisé en ce que** le boîtier (38) est produit en emboutissant un matériau en acier.

8. Dispositif selon l'une quelconque des revendications 1 à 7, **caractérisé en ce que** les moyens d'ancrage, qui sont réalisés comme ancrages plats, sont réalisés pour l'interaction avec un siège de vanne ou pour actionner des moyens d'injection comme poussière ou comme aiguille, notamment pour un fluide gazeux.

9. Utilisation du dispositif selon l'une quelconque des revendications 1 à 8 pour réaliser une vanne de gaz, notamment pour des gazes réactifs, et/ou pour une unité de véhicule, la partenaire d'actionnement étant un agencement de valve, notamment un siège, de la vanne de gaz.

10. Utilisation selon la revendication 9, **caractérisé en ce que** le boîtier est réalisé de telle manière qu'une épaisseur de la section de base a un ratio entre 1 : 1,5 et 1 : 5 par rapport à une course d'actionnement maximum de moyens d'ancrage.

11. Procédé pour la production du dispositif d'actionnement électromagnétique selon l'une quelconque des revendications 1 à 8, **caractérisé par** les étapes suivantes :
- insérant le porteur-bobine pourvu de l'enroulement dans les moyens de noyau (30),
- encapsulant les moyens de noyau comprenant le porteur-bobine inséré avec une masse de coulage de telle manière qu'un corps est réalisé qui est adapté à une largeur d'intérieur du boîtier en forme de cocotte ou de gobelet et
- insérant le corps dans le boîtier de telle manière que la surface frontale plane de moyens de noyau reste sur la section de base du boîtier.

12. Procédé selon la revendication 11, **caractérisé en ce qu'**une section de prise mâle ou une section de prise femelle pour le contact en externe du connecteur de moyens de bobine est produit par l'encapsulation.
